# EUROPÄISCHE PATENTSCHRIFT

(11) **EP 3 663 487 B1**
(45) Veröffentlichungstag und Bekanntmachung des Hinweises auf die Patenterteilung: **21.07.2021**
(21) Anmeldenummer: 19204991.4
(22) Anmeldetag: 24.10.2019
(51) Int. Cl.: E04H 6/12, E04H 6/36, E04H 6/30

(54) **PARKROBOTER FÜR EIN KRAFTFAHRZEUG SOWIE VERFAHREN ZUM BETREIBEN EINES DERARTIGEN PARKROBOTERS**
PARKING ROBOT FOR A MOTOR VEHICLE AND METHOD FOR OPERATING SAME
ROBOT DE STATIONNEMENT POUR UN VÉHICULE AUTOMOBILE AINSI QUE PROCÉDÉ DE FONCTIONNEMENT D'UN TEL ROBOT DE STATIONNEMENT

(30) Priorität: 06.12.2018 DE 102018221174
(43) Veröffentlichungstag der Anmeldung: 10.06.2020
(73) Patentinhaber: Volkswagen AG, 38440 Wolfsburg (DE)
(72) Erfinder: Tzivanopoulos, Theodoros, 38442 Wolfsburg (DE); Ibenthal, Julius, 31275 Lehrte (DE)

(56) Entgegenhaltungen:
- DE-A1-102015 203 506
- DE-A1-102016 100 730
- DE-B3-102010 052 850
- GB-A- 653 506
- US-A- 3 120 196

## Beschreibung

Die Erfindung betrifft einen Parkroboter für ein Kraftfahrzeug sowie ein Verfahren zum Betreiben eines derartigen Parkroboters für ein Kraftfahrzeug.

Ein Parkroboter ist üblicherweise dazu ausgelegt, ein Kraftfahrzeug innerhalb einer vorgegebenen Infrastrukturumgebung, beispielsweise einem Parkhaus, zu einer vorgegebenen Parkposition zu transportieren. Der Parkroboter fährt dafür beispielsweise mit zumindest einem Teilbereich unter das Kraftfahrzeug, hebt dieses an und fährt daraufhin mit dem angehobenen Kraftfahrzeug zur vorgegebenen Parkposition, an der er das Kraftfahrzeug wieder absetzt. Mittels eines Parkroboters können somit Kraftfahrzeuge, unabhängig davon, ob sie beispielsweise über ein Fahrerassistenzsystem zum zumindest teilautonomen Einparken verfügen oder nicht, vollautonom und somit ohne Zutun eines Fahrers des Kraftfahrzeugs innerhalb der Infrastrukturumgebung bewegt werden.

In der DE 10 2016 224 098 A1 wird eine omnidirektionale mobile Kraftfahrzeug-Transportplattform beschrieben, die wenigstens drei Mecanumräder aufweist. Mit dieser mobilen Kraftfahrzeug-Transportplattform kann in den Zwischenraum zwischen einem Fahrzeugboden eines Kraftfahrzeugs und einer Fahrbahn gefahren werden und daraufhin das Kraftfahrzeug mittels einer Hubvorrichtung der Kraftfahrzeug-Transportplattform von der Fahrbahn angehoben werden. Hiermit wird das Kraftfahrzeug zumindest achsweise oder vollständig von der Fahrbahn abgehoben.

In der CN 207761382 U wird ein Transportwagen für ein Kraftfahrzeug beschrieben, der an zwei gegenüberliegenden Seiten jeweilige Klemmteile aufweist und dazu ausgelegt ist, unterhalb des Kraftfahrzeugs positioniert zu werden und mit den jeweiligen Klemmteilen ein jeweiliges Rad einer Radachse des Kraftfahrzeugs anzuheben. Ein Parkroboter oder Transportautomat für ein Kraftfahrzeug ist außerdem aus DE 10 2015 203506 A1 bekannt.

Es ist die Aufgabe der Erfindung, eine Lösung bereitzustellen, mit der ein Parkroboter ein Rad eines Kraftfahrzeugs von einem Fahrboden anheben kann.

Diese Aufgabe wird durch die Gegenstände der unabhängigen Patentansprüche gelöst. Vorteilhafte Ausgestaltungen mit zweckmäßigen und nicht-trivialen Weiterbildungen der Erfindung sind in den abhängigen Ansprüchen, der folgenden Beschreibung und den Figuren angegeben.

Der Erfindung liegt die Erkenntnis zugrunde, dass während eines Anhebens eines Rades eines Kraftfahrzeugs mittels Radauflagearmen eines Parkroboters unterschiedlich große temporäre Kräfte zum Anheben des Rades benötigt werden. Beispielsweise kann es der Fall sein, dass zu Beginn des Anhebens eine kleine vom Parkroboter aufzuwendende Kraft ausreicht, jedoch in einem fortgeschrittenen Stadium des Anhebens größere Kräfte zum weiteren Anheben des Rades nötig sind, wobei die zum Anheben des Rades benötigte Kraft während eines Anhebevorgangs beispielsweise kontinuierlich ansteigt. Es ist daher besonders sinnvoll, eine von einem Hebel, das heißt beispielsweise einem Radauflagearm eines Parkroboters, zum Anheben des Rades des Kraftfahrzeugs bereitgestellte Kraft während des Anhebevorgangs variabel zu gestalten.

Erfindungsgemäß ist entsprechend ein Parkroboter für ein Kraftfahrzeug vorgesehen, der ein Paar Radauflagearme aufweist. Diese beiden Radauflagearme sind jeweils senkrecht zu einer Parkroboterlängsrichtung an einem Parkrobotergrundkörper des Parkroboters angeordnet. Das Paar Radauflagearme ragt somit in einer Parkroboterquerrichtung aus dem Parkroboter hervor, das heißt sie stehen seitlich vom Parkrobotergrundkörper ab. Die Radauflagearme können auch klappbar ausgestaltet sein, was weiter unten noch beschrieben wird. Dann stellt die hier beschriebene Anordnung die ausgeklappte Stellung dar. Die jeweiligen Radauflagearme des Parkroboters sind jeweils zumindest mittelbar mittels eines Kurbelelements um eine jeweilige Drehachse drehbar am Parkroboter gelagert. Mit anderen Worten kann der jeweilige Radauflagearm also mittels seines Kurbelelements auf und ab geschwenkt werden. Ein Kurbelelement bezeichnet allgemein ein stabförmiges oder plattenförmiges, an einem Ende drehbares Maschinenelement, das durch Kraftangriff an seinem freien Ende in Drehung versetzt werden kann. Im Fall des Parkroboters befindet sich an einem Ende des jeweiligen Kurbelelements einer der Radauflagearme des Parkroboters, wohingegen das andere Ende des Kurbelelements zumindest mittelbar an einem drehbaren Maschinenelement, das sich um die Drehachse dreht, gelagert ist. Dieses Maschinenelement, kann zum Beispiel durch ein Wellenelement gebildet sein, mit welchem das Kurbelelement starr verbunden ist. Bei einer Drehbewegung um diese Drehachse, die also hier als Gerade zu verstehen ist, um die sich das Wellenelement mit dem Kurbelelement und dem Radauflagearm dreht, wird somit der jeweilige Radauflagearm um einen Drehmittelpunkt des Maschinenelements und somit um die Drehachse gedreht, wobei ein Radius der Drehbewegung einer Längserstreckung des Kurbelelements entspricht. Letztendlich wird dadurch ermöglicht, dass der jeweilige Radauflagearm dazu ausgelegt ist, eine Kreisbewegung um den Drehmittelpunkt der Drehachse durchzuführen, sobald eine Drehbewegung um die Drehachse erfolgt.

Der Parkroboter ist nun dazu ausgelegt, von außen neben ein Rad einer Radachse des Kraftfahrzeugs autonom in eine Aufnahmeposition heranzufahren. In dieser Aufnahmeposition sind die jeweiligen Radauflagearme jeweils parallel zur Radachse des Kraftfahrzeugs angeordnet und einer der Radauflagearme ist in Fahrzeuglängsrichtung vor und der andere Radauflagearm in Fahrzeuglängsrichtung hinter dem Rad positioniert. Der Parkroboter ist also dazu ausgelegt, sich selbstständig fahrend dem Kraftfahrzeug zu nähern und sich im Bereich eines der Räder des Kraftfahrzeugs derart zu positionieren, dass er mit seinen jeweiligen Radauflagearmen das jeweilige Rad beidseitig, also in Fahrzeuglängsrichtung von vorne und hinten, umfasst. Hierbei können die jeweiligen Radauflagearme bereits jeweils an jeweiligen gegenüberliegenden Außenseiten einen Radmantel des Rades des Kraftfahrzeugs berühren. Es ist jedoch auch möglich, dass die jeweiligen Radauflagearme in der Aufnahmeposition in einem von einem Raddurchmesser des Rades abhängigen jeweiligen Abstand von dem Rad angeordnet sind. Denn das Paar der Radauflagearme ist bevorzugt starr, typischerweise in einem 90-Grad-Winkel zu einer Oberfläche des Parkroboters am Parkroboter angeordnet, sodass der Abstand zwischen den Radauflagenarmen zunächst nicht dynamisch an den Raddurchmesser des Rades angepasst wird. Alternativ oder zusätzlich dazu ist es möglich, dass die jeweiligen Radauflagearme einklappbar und ausklappbar sind und beispielsweise zunächst an dem Parkrobotergrundkörper herangeklappt in einer eingeklappten Stellung angeordnet sind und erst dann ausgeklappt werden, wenn sich der Parkroboter von außen neben das Rad des Kraftfahrzeugs autonom bewegt hat. Dort können sie dann die oben beschriebene Aufnahmeposition einnehmen, die in diesem Beispiel einer ausgeklappten Stellung der jeweiligen Radauflagearme entspricht.

Der Parkroboter ist zudem dazu ausgelegt, durch jeweiliges Drehen des jeweiligen Radauflagearms um die jeweilige Drehachse in einer vorgegebenen Drehrichtung das Rad des Kraftfahrzeugs anzuheben. Hierbei sind die jeweiligen Drehrichtungen der jeweiligen Radauflagearme zueinander entgegengesetzt. Beispielsweise kann der Radauflagearm, der in Fahrzeuglängsrichtung vor dem Rad positioniert ist, auf das Rad zugedreht werden, um das Rad anzuheben, wohingegen der hinter dem Rad positionierte Radauflagearm dafür entgegengesetzt ebenfalls auf das Rad zugedreht wird. Die gesamte Drehbewegung während des Anhebens des Rads des Kraftfahrzeugs von einem Fahrboden umfasst hierbei bevorzugt einen Drehwinkel in einem Bereich von 70° bis 110°, z.B. von 90 Grad. Zu einem Absetzen des Kraftfahrzeugs können beispielsweise die jeweiligen Radauflagearme in jeweils entgegengesetzter Drehrichtung zu der jeweiligen vorgegebenen beschriebenen Drehrichtung gedreht werden, wodurch letztendlich das Rad des Kraftfahrzeugs von der zuvor angehobenen Stellung wieder zurück zum Fahrboden bewegt wird. Die Radauflagearme lupften also durch ihre Drehbewegung das Rad hoch.

Erfindungsgemäß ist also ein Hebelmechanismus vorgesehen, mit dem ein Rad eines Kraftfahrzeugs angehoben werden kann. Da zum Anheben eines Kraftfahrzeugs mit beispielsweise vier Rädern somit insgesamt vier Parkroboter benötigt werden, um dieses Kraftfahrzeug anzuheben und beispielsweise innerhalb eines Parkhauses zu einer Zielposition, wie zum Beispiel einem vorgegebenen Stellplatz zu transportieren, kann somit die von dem Parkroboter zu tragende Masse des Kraftfahrzeugs auf vier Parkroboter verteilt werden. Diese verfügen jeweils über die beschriebenen Komponenten zum Anheben beziehungsweise Absetzen des Rades des Kraftfahrzeugs. Da jedes Rad einzeln von einem Parkroboter transportiert wird, können mit derartigen Parkrobotern außerdem Rampen und Steigen innerhalb beispielsweise eines Parkhauses zuverlässig überwunden werden, da keine Parkroboterkomponenten mit beispielsweise kleiner Bodenfreiheit über einen Großteil einer Fläche eines Kraftfahrzeugbodens angeordnet sind, die möglicherweise an derartigen Rampen oder Steigen aufsetzen könnten, wodurch beispielsweise ein Transport des Kraftfahrzeugs von einer Parkhausebene zu einer anderen Parkhausebene besonders einfach möglich wird. Mit erfindungsgemäß ausgebildeten Parkrobotern kann somit ein Kraftfahrzeug vom Fahrboden angehoben und über Bodenschrägen hinweg transportiert werden.

Zu der Erfindung gehören auch Ausgestaltungsformen, durch die sich zusätzliche Vorteile ergeben.

In einer der vorteilhaften Ausgestaltungsform ist es vorgesehen, dass der jeweilige Radauflagearm mit dem jeweiligen Kurbelelement zumindest mittelbar mit einer jeweiligen exzentrischen Seilrolle starr gekoppelt ist. Die exzentrische Seilrolle weist hierbei einen ersten Teilbereich mit einem vorgegebenen ersten Rollenradius und einen zweiten Teilbereich mit einem vorgegebenen zweiten Rollenradius auf, wobei der zweite Rollenradius größer als der erste Rollenradius ist. Die Seilrolle kann also beispielsweise eine elliptische Rollenfläche aufweisen, die senkrecht zu einer Seilrollendrehachse, um die die Seilrolle drehbar gelagert ist, angeordnet ist. Während des Drehens des jeweiligen Radauflagearms um die jeweilige Drehachse in der vorgegebenen Drehrichtung wird die Seilrolle beispielsweise um ein Viertel ihrer elliptischen Grundform gedreht, wenn die gesamte Drehbewegung während des Anhebens des Rads des Kraftfahrzeugs vom Fahrboden den oben beispielhaft genannten Drehwinkel von 90 Grad aufweist. Für andere Drehwinkel aus dem genannten Winkelbereich gilt das Entsprechende. Die Kopplung zwischen dem jeweiligen Radauflagearm über das jeweilige Kurbelelement mit der jeweiligen exzentrischen Seilrolle ist hierbei unbeweglich.

Um die jeweilige exzentrische Seilrolle ist jeweils ein Seil gewunden und die jeweilige Seilrolle ist um die jeweilige Drehachse, um die auch der jeweilige Radauflagearm mit dem jeweilige Kurbelelement drehbar gelagert ist, drehbar gelagert. Der Parkroboter weist zudem eine zentrale Antriebseinheit auf, die dazu ausgelegt ist, das jeweilige Seil auf der jeweiligen Seilrolle abzuwickeln oder aufzuwickeln. Hierbei sind bevorzugt zwei getrennte Seile vorgesehen, eines für jeweils die Seilrolle eines der Radauflagearme, die auf getrennten jeweiligen Rollen auf der zentralen Antriebseinheit auf- beziehungsweise abgewickelt werden. Dreht sich beispielsweise die zentrale Antriebseinheit in einer vorgegebene Rotationsrichtung der Antriebseinheit, wird beispielsweise Seil auf dieser zentralen Antriebseinheit aufgewickelt und dabei von der jeweiligen exzentrischen Seilrolle abgewickelt. Durch dieses Abwickeln des jeweiligen Seils von der jeweiligen Seilrolle auf beispielsweise eine Rolle der zentralen Antriebseinheit kann beispielsweise die jeweilige Seilrolle derart gedreht werden, dass eine jeweilige Länge des Seils zwischen der Seilrolle und der Rolle der elektrischen Antriebseinheit variiert wird. Beginnt das Aufwickeln des Seils auf der Rolle der zentralen Antriebseinheit beispielsweise dann, wenn gerade die exzentrische Seilrolle derart relativ zur zentralen Antriebseinheit positioniert ist, dass sie mit dem ersten Teilbereich mit dem kleinen ersten Rollenradius in deren Richtung zeigt, wird durch weiteres Aufrollen des Seiles auf der Rolle der zentralen Antriebseinheit durch die Rotationsbewegung der Antriebseinheit die jeweilige exzentrische Seilrolle derart bewegt, dass sie letztendlich derart relativ zur zentralen Antriebseinheit positioniert ist, dass sie mit dem zweiten Teilbereich mit dem zweiten Rollenradius in deren Richtung orientiert ist, der größer als der erste Rollenradius ist. Hierdurch wird durch die Rotation der Antriebseinheit beispielsweise die jeweilige Seillänge zwischen der exzentrischen Seilrolle und der Rolle der externen Antriebseinheit verkleinert.

Je nachdem, wie lang das Seil zwischen der exzentrischen Seilrolle und der zentralen Antriebseinheit ist, desto größer ist die Kraft, die der Radauflagearm auf das Rad des Kraftfahrzeugs ausüben kann. Bei der Drehung um 90 Grad des Radauflagearms um die Drehachse ist es somit sinnvoll, dass beispielsweise zunächst die exzentrische Seilrolle derart angeordnet ist, dass sie mit dem zweiten Teilbereich mit dem zweiten größeren Rollenradius in Richtung der zentralen Antriebseinheit orientiert ist, sodass die Seillänge möglichst kurz ist. Durch die Drehbewegung um die Rotationsachse der zentralen Antriebseinheit wird daraufhin beispielsweise das Seil auf der Rolle der zentralen Antriebseinheit aufgewickelt, wodurch die exzentrische Seilrolle eine Drehbewegung erfährt, wodurch sich das Wellenelement um die Drehachse dreht und folglich auch das Kurbelelement mit dem Radauflagearm. Bei der Drehung wird das Seil zwischen der Seilrolle und der Rolle der zentralen Antriebseinheit immer länger, bis nach der Drehung um 90 Grad die exzentrische Seilrolle derart angeordnet ist, dass sie mit dem ersten Teilbereich mit dem ersten kurzen Rollenradius in Richtung der zentralen Antriebseinheit orientiert ist. Die Kraft, mit der der Radauflagearm dabei auf das Rad des Kraftfahrzeugs wirkt, wird während dieser Rotationsbewegung und der dadurch bewirkten Drehbewegung stets größer. Hierdurch wird also beim Anheben des Rades genau dann mehr Kraft zum Anheben bereitgestellt, wenn diese benötigt wird, und zwar typischerweise ab einer Drehung des Radauflagearms um typischerweise 45 Grad nach Beginn des Abhebevorgangs.

Alternativ zu einer jeweiligen exzentrischen Seilrolle kann auch ein jeweiliger Exzenter mit dem jeweiligen Radauflagearm mit dem jeweiligen Kurbelelement gekoppelt sein. Alternativ dazu wäre auch eine jeweilige Nockenwelle als Wellenelement denkbar, an der der jeweilige Radauflagearm mit dem jeweiligen Kurbelelement zumindest mittelbar starr gekoppelt ist.

Letztendlich wird durch die exzentrische Seilrolle erreicht, dass mit einer konstanten Drehzahl und gleichbleibender Kraft am Seil ein variables Moment, das heißt eine variable Kraft am Radauflagearm, erreicht wird, was zum Anheben des Rades besonders vorteilhaft ist und dieses vereinfacht. Mithilfe der exzentrischen Seilrolle, das heißt mithilfe einer exzentrischen Welle, ist es nämlich möglich, dass zum Anheben des Rades bereitgestellte Kraft über einen Drehwinkel zunimmt. Letztendlich wird es dadurch möglich, dass es mit einer relativ kleinen Seilkraft möglich ist, das Rad des Kraftfahrzeugs anzuheben. Somit ist im Parkroboter nur ein relativ kleiner Bauraum nötig, da eine klein dimensionierte zentrale Antriebseinheit ausreicht, um sogar schwere Kraftfahrzeuge anheben zu können. Hierdurch wird der Parkroboter zudem besonders kostengünstig in einer Parkroboterherstellung.

In einer weiteren vorteilhaften Ausgestaltungsform der Erfindung ist es vorgesehen, dass eine jeweilige Zahnscheibe mit dem jeweiligen Kurbelelement koppelt und um die jeweilige Drehachse drehbar gelagert ist. Die Zahnscheibe weist mehrere Zähne auf, die mit vorgegebenen Abständen und vorgegebenen Dimensionen an einem äußeren Rand der Zahnscheibe angeordnet sind. Der jeweiligen Zahnscheibe ist ein jeweiliger Sicherheitskeil zugeordnet, der über einen eigenen jeweiligen Haltemechanismus verfügt. Der jeweilige Sicherheitskeil ist nun dazu ausgelegt, mittels des jeweiligen Haltemechanismus an die jeweilige Zahnscheibe angelegt zu werden. Dies erfolgt beispielsweise immer dann, wenn mithilfe des Parkroboters ein Rad eines Kraftfahrzeugs angehoben werden soll. Zudem ist die jeweilige Zahnscheibe dazu ausgelegt, beim Drehen der jeweiligen Zahnscheibe um die jeweilige Drehachse in der vorgegebenen Drehrichtung von einem Zahn der Zahnscheibe zu einem in der Drehrichtung benachbarten Zahn bewegt zu werden. Wenn beispielsweise durch Drehen des jeweiligen Radauflagearms um die jeweilige Drehachse in der vorgegebenen Drehrichtung das Rad des Kraftfahrzeugs angehoben wird, wird kontinuierlich der Sicherheitskeil von einem Zahn der Zahnscheibe zum nächsten Zahn weiterbewegt. Die Zahnscheibe ist zudem dazu ausgelegt, dass ein Drehen in die entgegengesetzte Drehrichtung blockiert wird. Dies ist möglich, da die einzelnen Zähne jeweils eine steile und eine im Vergleich dazu weniger steile Seite aufweisen, sodass der jeweilige Sicherheitskeil entlang der weniger steilen Seiten von Zahn zu Zahn gleiten kann, jedoch in umgekehrter Drehrichtung in seiner Bewegung von der steilen Seite blockiert wird, über die er nicht weiter zum in dieser Drehrichtung benachbarten Zahn gleiten kann. Mithilfe der Zahnscheibe ist somit ein Sicherheitsmechanismus möglich, sodass beispielsweise bei einem Seilriss die jeweiligen Radauflagearme nicht unkontrolliert in gegengesetzte Drehrichtung drehen und das Rad des Kraftfahrzeugs unkontrolliert zurück zum Fahrboden ablassen. Denn der Sicherheitskeil verkeilt sich in einem der Zähne der Zahnscheibe und lässt keine Drehbewegung in die entgegengesetzte Richtung zu.

Zudem kann, wenn eine Endstellung des Drehens des jeweiligen Radauflagearms um die Drehachse erreicht ist, mittels der Zahnscheibe sichergestellt werden, dass das Rad des Kraftfahrzeugs in der angehobenen Stellung verbleibt und nicht durch eine weitere oder entgegengesetzte Drehbewegung des Radauflagearms von dieser angehobenen Position wegbewegt wird. Während des Anhebens des Rades dreht sich also die Zahnscheibe und der Sicherheitskeil hüpft selbstständig immer wieder einen Zahn weiter. Bei einem Ausfall, beispielsweise einem Seilriss, hält sich der Sicherheitskeil jedoch an einer Flanke, das heißt der steilen Seite, des jeweiligen Zahns. Der Anhebemechanismus des Parkroboters ist somit besonders zuverlässig und abgesichert gegen mögliche Komplikationen, wie beispielsweise einen Seilriss von einem oder beiden Seilen des Parkroboters.

In einer weiteren besonders vorteilhaften Ausgestaltungsform ist es vorgesehen, dass zum Absetzen des Rades des Kraftfahrzeugs der Sicherheitskeil dazu ausgelegt ist, während eines jeweiligen Drehens des jeweiligen Radauflagearms um die jeweilige Drehachse in der entgegengesetzten Drehrichtung mittels des Halteelements in einem vorgegebenen Abstand von der Zahnscheibe gehalten zu werden. Zum Absetzen des Rades des Kraftfahrzeugs wird der Sicherheitskeil somit von der Zahnscheibe gelöst und über ein Eigengewicht des Kraftfahrzeugs bewegen sich die jeweiligen Radauflagearme nach unten, das heißt das jeweilige Kurbelelemente mit dem jeweiligen Radauflagearm dreht sich nach unten in Richtung Fahrboden. Dies wird hierbei außerdem mithilfe des jeweiligen Seiles und der zentralen Antriebseinheit gesteuert und kontrolliert. Während des Absenkens ist somit der Sicherheitskeil nicht an der Zahnscheibe angelegt. Hierdurch ist insgesamt ein Absenken des Rades des Kraftfahrzeugs besonders zuverlässig und einfach möglich.

Insgesamt eignet sich der beschriebene Parkroboter also dazu, da er besonders klein skaliert, das heißt platzsparend, ist sowie kostengünstig herstellbar ist besonders zum Realisieren eines Anhebemechanismus für ein Rad eines Kraftfahrzeugs mit einem Parkroboter.

In einer weiteren Ausgestaltungsform der Erfindung ist es vorgesehen, dass die jeweiligen Radauflagearme eine jeweilige Abgleitrolle aufweisen. Bei dieser Abgleitrolle handelt es sich um eine passive Rolle, die stets drehbar um eine eigene Drehachse gelagert ist. Die jeweilige Abgleitrolle ist somit nicht fest relativ zum Parkroboter sowie zum angehobenen Rad angeordnet. Die jeweilige Drehachse der jeweiligen Abgleitrolle ist parallel zur Drehachse angeordnet und somit in der Aufnahmeposition parallel zu einer Radachse des Kraftfahrzeugs angeordnet. Nachdem der Parkroboter von außen neben das eine der Räder des Kraftfahrzeugs automatisch herangefahren ist, wird durch Drehen des Paars der Radauflagearme das Rad angehoben, wobei hierbei die jeweiligen Radauflagearme parallel zur Radachse des Kraftfahrzeugs im Bereich des Rades angeordnet sind. Die jeweiligen Abgleitrollen sind also dann in einer Längsrichtung der jeweiligen Abgleitrollen parallel zur Radachse des Kraftfahrzeugs angeordnet und somit senkrecht zu einer kreisförmigen Radfläche des Rades des Kraftfahrzeugs. Bei einem Drücken der Radauflagearme gegen das jeweilige Rad des Kraftfahrzeugs kann dieses an den Abgleitrollen abgleiten, wobei letztendlich das Rad, wenn die jeweiligen Radauflagearme ihre Endposition erreicht haben vom Fahrzeugboden angehoben ist. Durch das beidseitige Drücken mit jeweiligen Radauflagearmen gegen das jeweilige Rad wird erreicht, dass bei dem Anheben sowie gegebenenfalls dem Absetzen des Kraftfahrzeugs das Kraftfahrzeug nicht wegrollt und zudem das Anheben und das Absetzen besonders effizient hinsichtlich erforderlicher Energie zum Anheben beziehungsweise Absetzen des Kraftfahrzeugs ist.

In einer weiteren vorteilhaften Ausgestaltungsform der Erfindung ist es vorgesehen, dass der Parkroboter eine Sensoreinrichtung umfasst, die dazu ausgelegt ist, eine Umgebung des Parkroboters zu erfassen sowie Hindernisse für den Parkroboter in der erfassten Umgebung zu lokalisieren. Bei der Sensoreinrichtung des Parkroboters kann es sich beispielsweise um eine Kamera, ein Radargerät, einen Laserscanner, ein Ultraschallgerät oder ein Lidar-Gerät handeln. Diese Sensoreinrichtung ist bevorzugt in einem oberen Teilbereich des Parkroboters angeordnet. Die Sensoreinrichtung ist nun dazu ausgelegt, die Umgebung des Parkroboters zu beobachten und festzuhalten, um beispielsweise Säulen in einem Parkhaus, andere Fahrzeuge innerhalb des Parkhauses oder sich im Parkhaus bewegende Personen zu erfassen. Zudem ist die Sensoreinrichtung dazu ausgelegt, festzustellen, ob es sich bei einem erfassten Objekt in der Umgebung des Parkroboters um ein Hindernis für den Parkroboter handelt und dieses in der Umgebung des Parkroboters zu lokalisieren. Beispielsweise kann es sich bei Säulen im Parkhaus oder den anderen Fahrzeugen, die sich im Parkhaus bewegen, für den Parkroboter und das von dem Parkroboter angehobene Kraftfahrzeug um potentielle Hindernisse handeln, zum Beispiel wenn eine Fahrtrajektorie des Parkroboters auf das entsprechende Hindernis zuführt.

Basierend auf den von der Sensoreinrichtung erfassten und bestimmten Daten kann beispielsweise von einer Steuereinrichtung des Parkroboters eine Fahrtrajektorie für den Parkroboter von der Startposition zur Zielposition im Parkhaus unter Berücksichtigung der erfassten Umgebung und der in der Umgebung lokalisierten Hindernisse ermittelt werden. Diese Fahrtrajektorie eignet sich jedoch nur für Fahrten mit relativ kleinen Geschwindigkeiten von typischerweise maximal fünf bis sechs Kilometern pro Stunde. Soll der Parkroboter beziehungsweise mehrere Parkroboter, die jeweilige Räder des Kraftfahrzeugs angehoben haben, schneller beispielsweise durch das Parkhaus fahren können, können beispielsweise mittels eines Leitroboters jeweilige Fahrtrajektorien oder andere Ansteuersignale für die jeweiligen Parkroboter bereitgestellt werden, sodass auch Fahrten mit größeren Geschwindigkeiten zu der Zielposition im Parkhaus möglich sind. Bei der Bestimmung der jeweiligen Fahrtrajektorien der jeweiligen Parkroboter können zudem Kartendaten der Umgebung, zum Beispiel des Parkhauses, berücksichtigt werden. Diese können beispielsweise von einem Parkhausverwaltungsserver, das heißt von einem Infrastrukturverwaltungsserver, dem Leitroboter und/oder den jeweiligen Parkrobotern bereitgestellt werden. Durch die parkrobotereigene Sensoreinrichtung ist der Parkroboter jedoch stets in der Lage, Hindernisse in seiner Umgebung, wie beispielsweise einen auf den Parkroboter zurollenden Ball, frühzeitig zu erfassen und zu lokalisieren und gegebenenfalls eine an ihn übermittelte Fahrtrajektorie entsprechend anzupassen und/oder einen Notstopp zu veranlassen. Mittels des Parkroboters kann somit das Kraftfahrzeug durch entsprechendes Ansteuern einer Antriebsmaschine des Kraftfahrzeugs gemäß der auf Basis der Sensoreinrichtung gegebenenfalls angepassten Fahrtrajektorie innerhalb des Parkhauses bewegt werden, sodass das autonome Fahren des Parkroboters mit dem angehobenen Rad des Kraftfahrzeugs zu der Zielposition im Parkhaus besonders zuverlässig möglich ist.

In einer Weiterbildung der Erfindung ist es vorgesehen, dass der Parkroboter eine elektrische Antriebsmaschine, eine Batterie zum Versorgen der elektrischen Antriebsmaschine mit elektrischer Energie und zumindest ein Antriebsrad umfasst. Der Parkroboter ist zudem dazu ausgelegt, mittels der elektrischen Antriebsmaschine das mindestens eine Antriebsrad zum Fortbewegen des Parkroboters anzutreiben. Der Parkroboter ist somit dazu ausgelegt, unabhängig von dem Kraftfahrzeug oder anderen Parkrobotern seine Radauflagearme anzusteuern sowie sich auf dem Fahrboden, beispielsweise innerhalb einer Infrastrukturumgebung wie einem Parkhaus, zu bewegen. Mittels der elektrischen Antriebsmaschine, der Batterie und dem zumindest einen Antriebsrad ist der Parkroboter außerdem dazu ausgelegt, Rampen oder andere Steigen beispielsweise innerhalb dieser Infrastrukturumgebung zu überwinden. Der Parkroboter kann zudem eine Steuereinrichtung umfassen, die dazu ausgelegt ist, die elektrische Antriebsmaschine derart anzusteuern, dass diese den Parkroboter auf der beispielsweise vorgegebenen Fahrtrajektorie von der Startposition zu der Zielposition, beispielsweise zu einem vorgegebenen Stellplatz im Parkhaus, autonom bewegt. Der Parkroboter ist zudem dazu ausgelegt, zumindest eine Teilmasse des Kraftfahrzeugs zusätzlich zu einer Eigenmasse des Parkroboters zu tragen, damit beispielsweise ein Kraftfahrzeug mit vier Rädern von insgesamt vier Parkrobotern, die jeweils über eine elektrische Antriebsmaschine, eine Batterie zum Versorgen der elektrischen Antriebsmaschine mit elektrischer Energie sowie zumindest ein Antriebsrad zum Fortbewegen des jeweiligen Parkroboters verfügen, von der Startposition zur Zielposition gegebenenfalls auch über mehrere Etagen eines Parkhauses transportiert werden kann. Der Parkroboter verfügt also über die nötigen Komponenten, um einen autonomen Transport zumindest einer Teilmasse des Kraftfahrzeugs zu ermöglichen.

In einer weiteren besonders vorteilhaften Ausgestaltungsform der Erfindung ist es vorgesehen, dass der Parkroboter eine Kommunikationsschnittstelle für eine Kommunikationsverbindung mit zumindest einem weiteren Parkroboter umfasst. Über diese Kommunikationsverbindung, die zum Beispiel als drahtlose Funkverbindung, wie beispielsweise als WLAN-Verbindung, realisiert ist, kann der Parkroboter beispielsweise eine Fahrtrajektorie vom Parkhausverwaltungsserver oder einem Leitroboter empfangen, aber auch jeweilige Daten und Signale, beispielsweise Informationen über den heranrollenden Ball im Bereich des Parkroboters, an andere Parkroboter, den Leitroboter oder den Parkhausverwaltungsserver senden. Hierdurch wird beispielsweise ein Zusammenspiel aus mehreren Parkrobotern, ein Zusammenspiel mit einem Leitroboter in einem Parkrobotersystem und/oder ein Datenaustausch mit einem Infrastrukturverwaltungsserver besonders vorteilhaft möglich.

Erfindungsgemäß ist zudem ein Verfahren zum Betreiben eines Parkroboters, wie er oben beschrieben wurde, vorgesehen. Die im Zusammenhang mit dem erfindungsgemäßen Parkroboter vorgestellten bevorzugten Ausgestaltungen und deren Vorteile gelten entsprechend, soweit anwendbar, für das erfindungsgemäße Verfahren zum Betreiben eines derartigen Parkroboters. Das Verfahren zum Betreiben des Parkroboters umfasst folgende Schritte: ein autonomes Heranfahren des Parkroboters von außen neben ein Rad einer Radachse eines Kraftfahrzeugs in eine Aufnahmeposition, wobei die jeweiligen Radauflagearme des Parkroboters jeweils parallel zur Radachse angeordnet werden und einer der Radauflagearme in einer Fahrzeuglängsrichtung vor und der andere Radauflagearm in Fahrzeuglängsrichtung hinter dem Rad positioniert wird, sowie ein Anheben des Rads des Kraftfahrzeugs durch jeweiliges Drehen des jeweiligen Radauflagearms um die jeweilige Drehachse in einer vorgegebenen Drehrichtung, wobei die jeweilige Drehrichtung der jeweiligen Radauflagearme zueinander jeweils entgegengesetzt ist.

In einer vorteilhaften Ausgestaltungsform des erfindungsgemäßen Verfahrens ist es vorgesehen, dass drei weitere Parkroboter jeweils eines von insgesamt vier Rädern des Kraftfahrzeugs angehoben haben. Zudem ist es vorgesehen, dass die vier Parkroboter jeweils in Übereinstimmung mit jeweiligen bereitgestellten Fahrtrajektorien zu einer vorgegebenen Zielposition fahren und dabei das Kraftfahrzeug durch jeweiliges Drehen der jeweiligen Radauflagearme in der jeweilig entgegengesetzten Drehrichtung wieder absetzen. Ein Kraftfahrzeug mit vier Rädern kann somit beispielsweise mittels eines Parkrobotersystems, das vier Parkroboter umfasst, von beispielsweise einer Abgabeposition in einem Eingangsbereich eines Parkhauses mittels des beschriebenen Verfahrens zu einem Stellplatz, beispielsweise in einem Obergeschoss des Parkhauses, gefahren werden und dort auf dem Stellplatz abgesetzt werden. Alternativ dazu können stets so viele Parkroboter für ein Kraftfahrzeug bereitgestellt werden, die das Kraftfahrzeug Räder aufweist, auf denen es fährt.

Informationen zu der Fahrroute sowie zu der gewünschten Zielposition können von einem Parkhausverwaltungsserver, das heißt von einem Infrastrukturverwaltungsserver, bereitgestellt werden. Alternativ oder zusätzlich dazu können die vier Parkroboter während des Transport des Kraftfahrzeugs durch das Parkhaus von einem Leitroboter begleitet werden, der beispielsweise vor dem Kraftfahrzeug, das von den vier Parkrobotern getragen wird, autonom voranfährt und dabei jeweilige Steuersignale, wie beispielsweise jeweilige Fahrtrajektorien, für die jeweiligen Parkroboter, die hier ein Parkrobotersystem darstellen, bereitstellt, wodurch eine besonders schnelle, rampentaugliche Fahrt des Kraftfahrzeugs durch das Parkhaus mittels der mehreren Parkroboter möglich wird, wobei die mehreren Parkroboter hierbei insbesondere klein skaliert und kostengünstig hinsichtlich der Realisierung des Hebemechanismus des Rades des Kraftfahrzeugs ausgebildet sind. Hierdurch wird es insbesondere möglich, dass das Kraftfahrzeug besonders nah neben anderen Fahrzeugen abgestellt werden kann, wodurch ein besonders enges und platzsparendes Parken innerhalb des Parkhauses ermöglicht wird.

Zu der Erfindung gehört auch die Steuereinrichtung für das Kraftfahrzeug. Die Steuereinrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Im Folgenden ist ein Ausführungsbeispiel der Erfindung beschrieben. Hierzu zeigt:
- Fig. 1: eine geschnittene Darstellung eines Parkroboters, der ein Rad eines Kraftfahrzeugs anhebt,
- Fig. 2: ein Längsschnitt eines Parkroboters, der ein Rad eines Kraftfahrzeugs anhebt, und
- Fig. 3: eine Draufsicht auf eine Zahnscheibe mit einem Sicherheitskeil.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

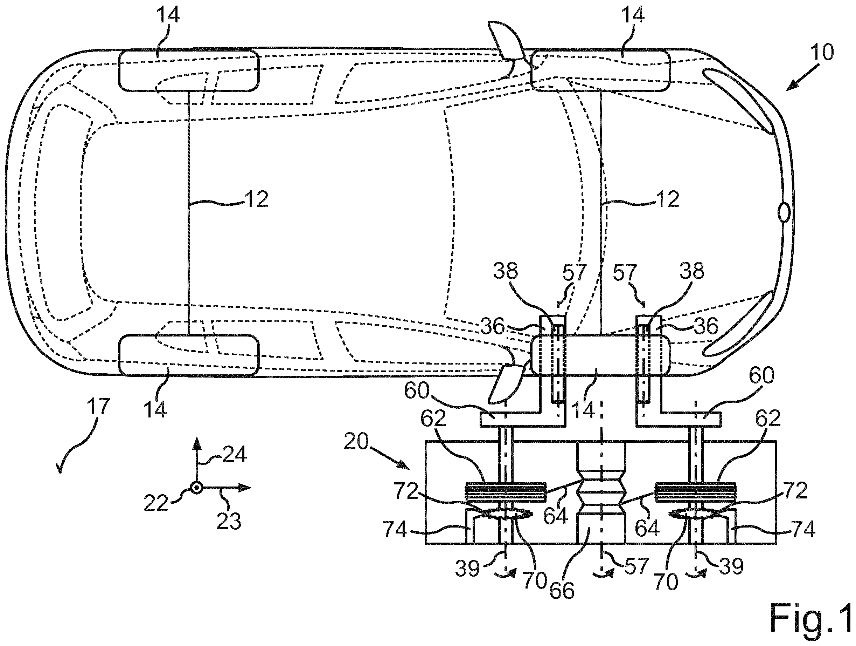

In Fig. 1 ist ein Kraftfahrzeug 10 skizziert, das zwei Radachsen 12 mit jeweils zwei Rädern 14 aufweist. Das vordere rechte Rad 14 des Kraftfahrzeugs 10 ist hierbei mithilfe eines Parkroboters 20 angehoben worden. In Fig. 1 ist eine Draufsicht auf den Parkroboter 20 sowie das Kraftfahrzeug 10 dargestellt.

Der Parkroboter 20 weist ein Paar Radauflagearme 36 auf, die jeweils eine Abgleitrolle 38 aufweisen, deren jeweilige Rotationsachse 57 parallel zu einem um eine jeweilige Drehachse 39 drehbaren Wellenelement angeordnet ist, um die der jeweilige Radauflagearm 36 zumindest mittelbar mittels eines jeweiligen Kurbelelements 60 drehbar gelagert ist.

Der jeweilige Radauflagearm 36 des Parkroboters 20 ist mit dem jeweiligen Kurbelelement 60 zudem zumindest mittelbar mit einer jeweiligen exzentrischen Seilrolle 62 starr gekoppelt. Um die jeweilige exzentrische Seilrolle 62 ist jeweils ein Seil 64 gewunden, das beispielsweise aus Stahl hergestellt ist, und die jeweilige Seilrolle 62 ist um die Drehachse 39 drehbar gelagert. Zudem ist um die jeweilige Drehachse 39 jeweils eine Zahnscheibe 70, die mit dem jeweiligen Kurbelelement 60 gekoppelt ist, drehbar gelagert. Der jeweiligen Zahnscheibe 70 ist zudem ein Sicherheitskeil 72 zugeordnet, der mittels eines jeweiligen Halteelements 74 an die jeweilige Zahnscheibe 70 angelegt oder von dieser entfernt werden kann.

Der Parkroboter 20 weist zudem eine zentrale Antriebseinheit 66 auf, die um die Rotationsachse 57 drehbar ist und dazu ausgelegt ist, das jeweilige Seil 64 auf der jeweiligen exzentrischen Seilrolle 62 aufzuwickeln oder abzuwickeln.

Der Parkroboter 20 ist dazu ausgelegt, von außen neben das Rad 14 der Radachse 12 des Kraftfahrzeugs 10 autonom in eine Aufnahmeposition heranzufahren. In Fig. 1 befindet sich der Parkroboter 20 in dieser genannten Aufnahmeposition, in der die jeweiligen Radauflagearmem 36 jeweils parallel zur Radachse 12 angeordnet sind und einer der Radauflagearme 36 in einer Fahrzeuglängsrichtung, die einer Parkroboterlängsrichtung 23 entspricht, vor und der andere Radauflagearm 36 in Fahrzeuglängsrichtung hinter dem Rad 14 positioniert ist. Die jeweiligen Rotationsachsen 57 der jeweiligen Abgleitrollen 38, die jeweilige Drehachsen 39 sowie die Rotationsachse 57 der zentralen Antriebseinheit 66 sind somit alle parallel zu einer Parkroboterquerrichtung 24 angeordnet. Senkrecht zur Parkroboterlängsrichtung 23 und zur Parkroboterquerrichtung 24 ist die Parkroboterhochrichtung 22 ausgerichtet.

Der Parkroboter 20 ist nun dazu ausgelegt, durch jeweiliges Drehen des jeweiligen Radauflagearms 36 um die jeweilige Drehachse 39 in einer vorgegebenen jeweiligen Drehrichtung das Rad 14 des Kraftfahrzeugs 10 anzuheben. Hierbei sind die jeweiligen Drehrichtungen der jeweiligen Radauflagearme 36 zueinander entgegengesetzt. Der eine Radauflagearm 36 wird beispielsweise im Uhrzeigersinn um die Drehachse 39 gedreht, wohingegen der andere Radauflagearm 36 beispielsweise entgegen des Uhrzeigersinns um die Drehachse 39 gedreht wird.

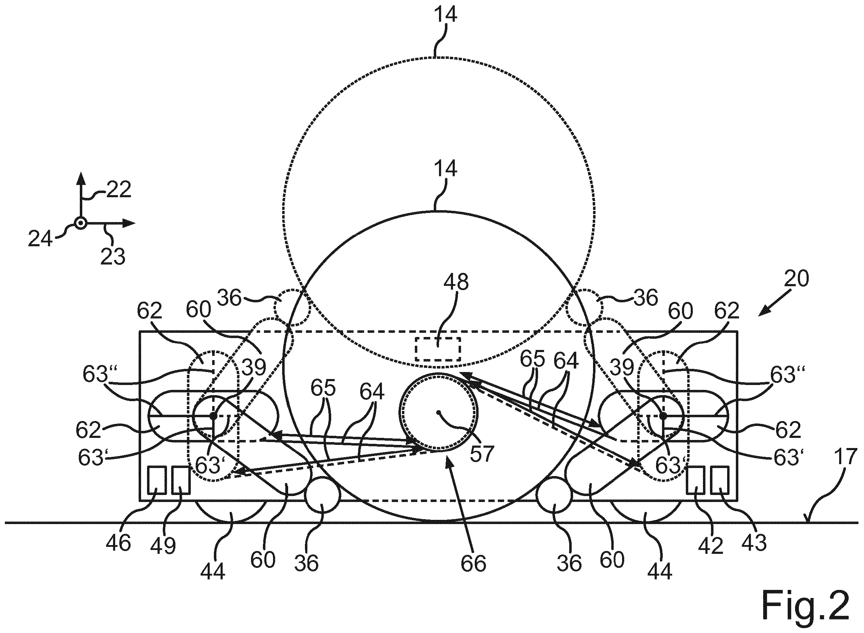

In Fig. 2 sind zwei verschiedene Stellungen der jeweiligen Radauflagearme 36 in einem Längsschnitt des Parkroboters 20 skizziert. Hierbei ist eine erste Stellung der jeweiligen Radauflagearme 36 sowie eines Rades 14 des Kraftfahrzeugs 10 mit durchgezogenen Linien bezeichnet, wohingegen die zweite Stellung jeweils mittels gestrichelter Linien skizziert ist.

Zunächst wird nun auf die mit durchgezogenen Linien skizzierte erste Stellung der jeweiligen Radauflagearme 36 des Parkroboters 20 eingegangen. Diese Stellung skizziert eine jeweilige Anordnung der jeweiligen Radauflagearme 36 bei Beginn des Anhebens des Rades 14 von einem Fahrboden 17, auf dem sowohl der Parkroboter 20 als auch das Kraftfahrzeug 10 stehen. Der Parkroboter 20 steht hierbei mit zwei Antriebsrädern 44 auf dem Fahrboden 17. In Fig. 2 sind zusätzlich zu den jeweiligen Radauflagearmen sowie den jeweiligen Kurbelelementen 60 die jeweiligen exzentrische Seilrolle 62 skizziert. Die jeweilige exzentrische Seilrolle 62 ist elliptisch geformt und weist daher zwei verschiedene Rollenradien 63' und 63" auf. Daher weist die jeweilige exzentrische Seilrolle 62 in beispielsweise einem ersten Teilbereich einen ersten vorgegebenen Rollenradius 63' auf und in einem zweiten Teilbereich einen zweiten vorgegebenen Rollenradius 63", wobei der zweite Rollenradius 63" größer ist als der erste Rollenradius 63'. Vor dem tatsächlichen Anheben des Rades 14 des Kraftfahrzeugs 10 ist nun die exzentrische Seilrolle 62 derart orientiert, dass der kürzere erste Rollenradius 63' parallel zur Parkroboterhochrichtung 22 angeordnet ist und somit das Seil 64 zwischen der exzentrischen Seilrolle 62 und einer entsprechenden Aufwickelrolle der zentralen Antriebseinheit 66 eine kurze Seillänge 65 aufweist.

Um das Rad 14 des Kraftfahrzeugs 10 nun in Parkroboterhochrichtung 22 nach oben zu bewegen und somit weiter vom Fahrboden 17 anzuheben, wird die exzentrische Seilrolle 62 um insgesamt 90 Grad gedreht, und nimmt daraufhin, wie es mit den gestrichelten Linien skizziert ist, eine Stellung ein, in der der größere zweite Rollenradius 63" parallel zur Parkroboterhochrichtung 22 angeordnet ist. Hierdurch verlängert sich die Seillänge 65 des Seils 64 verglichen mit der ersten beschriebenen Stellung der exzentrischen Seilrolle 62. Hierdurch wird also ein Hebelarm, mit dem eine Kraft zum Anheben des Rades 14 aufgebracht wird, zwischen der ersten und der zweiten Stellung deutlich vergrößert, da die entsprechende Seillänge 65 zunimmt und somit die Hebelarmlänge verlängert wird. Während des Anhebens des Rades 14 des Kraftfahrzeugs 10 wird somit zunehmend eine größere Kraft zum Anheben des Rades 14 von der zentralen Antriebseinheit 66 bereitgestellt.

In Fig. 2 sind zudem verschiedene weitere Komponenten des Parkroboters 20 skizziert. Der Parkroboter 20 weist zum einen eine Sensoreinrichtung 48 auf, bei der es sich beispielsweise um eine Kamera oder ein Radargerät handelt, die dazu ausgelegt ist, eine Umgebung des Parkroboters 20 zu erfassen sowie Hindernisse für den Parkroboter 20 in der erfassten Umgebung zu lokalisieren. Zudem weist der Parkroboter 20 eine elektrische Antriebsmaschine 42, eine Batterie 43 zum Versorgen der elektrischen Antriebsmaschine 42 mit elektrischer Energie und die zwei Antriebsräder 44 auf. Der Parkroboter 20 ist also dazu ausgelegt, mittels der elektrischen Antriebsmaschine 42 die zwei Antriebsräder 44 zum Fortbewegen des Parkroboters 20 anzutreiben. Hierbei können entsprechende Ansteuerbefehle von einer Steuereinrichtung 49 bereitgestellt werden. Diese Steuereinrichtung 49 kann zudem dazu ausgelegt sein, basierend auf den von der Sensoreinrichtung 48 erfassten bereitgestellten Daten betreffend die Umgebung des Parkroboters 20 sowie die in der erfassten Umgebung lokalisierten Hindernisse, eine Fahrtrajektorie für den Parkroboter 20 innerhalb beispielsweise einer vorgegebenen Infrastrukturumgebung, wie beispielsweise einem Parkhaus, zu bestimmen. Der Parkroboter 20 weist zudem eine Kommunikationsschnittstelle 46 auf, und zwar für eine Kommunikationsverbindung mit zumindest einem weiteren Parkroboter 20. Alternativ dazu kann über die Kommunikationsschnittstelle 46 auch eine Kommunikationsverbindung mit einem Infrastrukturverwaltungsserver, wie beispielsweise einem Parkhausverwaltungsserver, oder mit einem Leitroboter aufgebaut werden, über die beispielsweise die Fahrtrajektorie des Parkroboters 20 gesendet oder empfangen werden kann.

Der Parkroboter 20 kann nun beispielsweise derart betrieben werden, dass er zunächst autonom von außen neben das Rad 14 des Kraftfahrzeugs 10 in die Aufnahmeposition heranfährt und dort das Rad 14 durch jeweiliges Drehen des jeweiligen Radauflagearms 36 um die jeweilige Drehachse 39 in einer jeweiligen vorgegebenen Drehrichtung anhebt. Erfolgt ein derartiges Vorgehen beispielsweise zusätzlich von drei weiteren Parkrobotern 20 an den drei weiteren Rädern 14 von insgesamt vier Rädern 14 des Kraftfahrzeugs 10, kann von den insgesamt vier Parkrobotern 20 das Kraftfahrzeug 10 vollständig vom Fahrboden 17 angehoben werden. Die vier jeweiligen Parkroboter 20 können daraufhin in Übereinstimmung mit jeweiligen bereitgestellten Fahrtrajektorien zu einer vorgegebenen Zielposition, beispielsweise einem Stellplatz innerhalb eines Parkhauses, fahren und dort das Kraftfahrzeug 10 durch jeweiliges Drehen der jeweiligen Radauflagearme 36 in der jeweiligen entgegengesetzten Drehrichtung wieder absetzen. Daraufhin können die Parkroboter 20 beispielsweise zu einem weiteren Fahrzeug autonom fahren, um auch dieses beispielsweise an einer entsprechenden Zielposition autonom einzuparken.

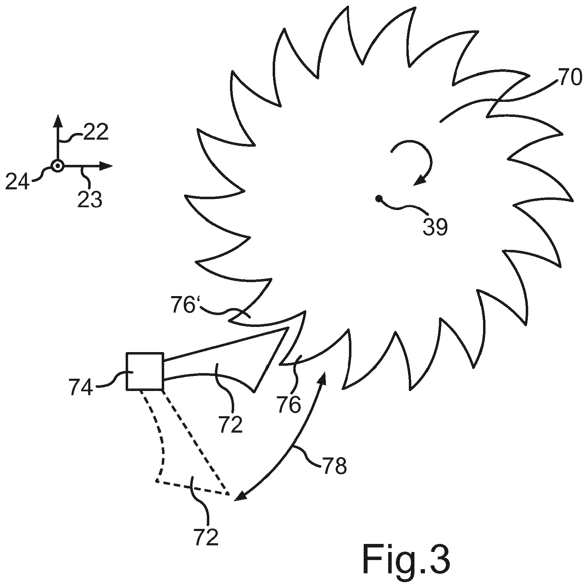

In Fig. 3 ist ein Sicherheitsmechanismus für den Parkroboter 20 skizziert. Dieser umfasst die Zahnscheibe 70, die mit dem jeweiligen Kurbelelement 60 und dem jeweiligen Radauflagearm 36 gekoppelt um die jeweilige Drehachse 39 drehbar gelagert ist. Die jeweilige Zahnscheibe 70 ist hierbei parallel zu einer jeweiligen Seilrolle 62 angeordnet, das heißt in der Ebene, die von der Parkroboterhochrichtung 22 und der Parkroboterlängsrichtung 23 aufgespannt wird. Eine Oberfläche der Zahnscheibe 70 ist somit senkrecht zur Drehachse 39 angeordnet. Seitlich der Zahnscheibe 70 ist das Halteelement 74 für den Sicherheitskeil 72 der Zahnscheibe 70 angeordnet. Hierbei ist mit durchgezogenen Linien eine Position des Sicherheitskeils 72 skizziert, in der er mittels des Halteelements 74 an die Zahnscheibe 70 angelegt ist. In dieser Position befindet sich der Sicherheitskeil 72 immer dann, wenn mittels der Radauflagearm 36 das Rad 14 des Kraftfahrzeugs 10 angehoben werden soll und/oder wenn das Rad 14 in der angehobenen Stellung gehalten werden soll. Beim Drehen der jeweiligen Zahnscheibe 70 um die Drehachse 39 in der vorgegebenen Drehrichtung, die hier mit einem kleinen Pfeil skizziert ist, bewegt sich der Sicherheitskeil 72 von einem Zahn 76 zu einem benachbarten Zahn 76' der Zahnscheibe 70. Aufgrund der skizzierten Form der jeweiligen Zähne 76, 76' ist ein Drehen in entgegengesetzter Drehrichtung um die Drehachse 39 jedoch blockiert. Die jeweiligen Zähne 76, 76' weisen dafür zwei unterschiedliche Seiten auf, eine flache Seite und eine im Vergleich dazu steilere Seite.

Zum Absetzen des Rades 14 des Kraftfahrzeugs 10 ist der Sicherheitskeil 72 dazu ausgelegt, während eines jeweiligen Drehens des jeweiligen Radauflagearms 36 um die jeweilige Drehachse 39 in der entgegengesetzten Drehrichtung mittels des Halteelements 74 in einem vorgegebenen Abstand 78 von der Zahnscheibe 70 gehalten zu werden. Diese Stellung des Sicherheitskeils 72 ist mit gestrichelten Linien ebenfalls in Fig. 3 skizziert. In dieser Stellung des Sicherheitskeils 72 berührt dieser nicht die jeweiligen Zähne 76, 76' der Zahnscheibe 70 und kann somit auch die Drehbewegung in entgegengesetzter Drehrichtung nicht blockieren. Diese Stellung des Sicherheitskeils 72 wird beispielsweise bei einem Absetzen des Rades 14 gewählt.

Das Beispiel zeigt insgesamt, wie mit dem Parkroboter 20 ein Hebemechanismus mit einer zentralen Antriebseinheit 66 realisiert werden kann. Voraussetzung hierfür ist die exzentrische, wie beispielsweise ellipsenförmig gestaltete, Seilrolle 62. Alternativ zu der skizzierten elliptischen Gestaltung der jeweiligen Seilrolle 62 kann diese auch aufwendigere Formen aufweisen, wodurch beispielsweise mehrere jeweilige Rollenradien 63', 63" möglich sind und somit ein differenzierteres Kraftprofil während einer Drehung um die jeweilige Drehachse 39 ermöglicht wird.

### Bezugszeichenliste

- 10: Kraftfahrzeug
- 12: Radachse
- 14: Rad
- 17: Fahrboden
- 20: Parkroboter
- 22: Parkroboterhochrichtung
- 23: Parkroboterlängsrichtung
- 24: Parkroboterquerrichtung
- 36: Radauflagearm
- 38: Abgleitrolle
- 39: Drehachse
- 42: Antriebsmaschine
- 43: Batterie
- 44: Antriebsrad
- 46: Kommunikationsschnittstelle
- 48: Sensoreinrichtung
- 49: Steuereinrichtung
- 57: Rotationsachse
- 60: Kurbelelement
- 62: Seilrolle
- 63', 63": Rollenradius
- 64: Seil
- 65: Seillänge
- 66: zentrale Antriebseinheit
- 70: Zahnscheibe
- 72: Sicherheitskeil
- 74: Halteelement
- 76, 76': Zahn
- 78: Abstand

## Patentansprüche

1. Parkroboter (10) für ein Kraftfahrzeug (10), wobei der Parkroboter (20) ein Paar Radauflagearme (36) aufweist, die jeweils zumindest mittelbar mittels eines Kurbelelements (60) um eine jeweilige Drehachse (39) drehbar gelagert sind, und der Parkroboter (20) dazu ausgelegt ist, von außen neben ein Rad (14) einer Radachse (12) des Kraftfahrzeugs (10) autonom in eine Aufnahmeposition heranzufahren, bei der die jeweiligen Radauflagearme (36) jeweils parallel zur Radachse (12) angeordnet sind und einer der Radauflagearme (36) in einer Fahrzeuglängsrichtung vor und der andere Radauflagearm (36) in Fahrzeuglängsrichtung hinter dem Rad (14) positioniert ist, und durch jeweiliges Drehen des jeweiligen Radauflagearms (36) um die jeweilige Drehachse (39) in einer vorgegebenen Drehrichtung, wobei die jeweiligen Drehrichtungen der jeweiligen Radauflagearme (36) zueinander entgegengesetzt sind, das Rad (14) des Kraftfahrzeugs (10) anzuheben.

2. Parkroboter (20) nach dem vorhergehenden Anspruch, wobei der jeweilige Radauflagearm (36) mit dem jeweiligen Kurbelelement (60) zumindest mittelbar mit einer jeweiligen exzentrischen Seilrolle (62), die einen ersten Teilbereich mit einem vorgegebenen ersten Rollenradius (63') und einen zweiten Teilbereich mit einem vorgegebenen zweiten Rollenradius (63"), der größer als der erste Rollenradius (63') ist, aufweist, starr gekoppelt ist, wobei um die Seilrolle (62) ein jeweiliges Seil (64) gewunden und die Seilrolle (62) um die Drehachse (39) drehbar gelagert ist, und eine zentrale Antriebseinheit (66) des Parkroboters (20) dazu ausgelegt ist, das jeweilige Seil (64) auf der jeweiligen Seilrolle (62) abwechselnd aufzuwickeln und abzuwickeln.

3. Parkroboter (20) nach einem der vorhergehenden Ansprüche, wobei eine jeweilige Zahnscheibe (70) mit dem jeweiligen Kurbelelement (60) gekoppelt um die jeweilige Drehachse (39) drehbar gelagert ist, wobei der jeweiligen Zahnscheibe (70) ein Sicherheitskeil (72) zugeordnet ist, der dazu ausgelegt ist, mittels eines Halteelements (74) an die Zahnscheibe (70) angelegt, beim Drehen der jeweiligen Zahnscheibe (70) um die jeweilige Drehachse (39) in der vorgegebenen Drehrichtung von einem Zahn (76) der Zahnscheibe (70) zu einem in der Drehrichtung benachbarten Zahn (76') bewegt zu werden und ein Drehen in entgegengesetzter Drehrichtung zu blockieren.

4. Parkroboter (20) nach dem vorhergehenden Anspruch, wobei zum Absetzen des Rades (14) des Kraftfahrzeugs (10) der Sicherheitskeil (72) dazu ausgelegt ist, während eines jeweiligen Drehens des jeweiligen Radauflagearms (36) um die jeweilige Drehachse (39) in der entgegengesetzten Drehrichtung mittels des Halteelements (74) in einem vorgegebenen Abstand (78) von der Zahnscheibe (70) gehalten zu werden.

5. Parkroboter (20) nach einem der vorhergehenden Ansprüche, wobei die jeweiligen Radauflagearme (36) eine jeweilige Abgleitrolle (38) aufweisen, deren jeweilige Rotationsachse (57) parallel zur Drehachse (39) angeordnet ist.

6. Parkroboter nach einem der vorhergehenden Ansprüche, wobei der Parkroboter eine Sensoreinrichtung umfasst, die dazu ausgelegt ist, eine Umgebung des Parkroboters zu erfassen sowie Hindernisse für den Parkroboter in der erfassten Umgebung zu lokalisieren.

7. Parkroboter nach einem der vorhergehenden Ansprüche, wobei der Parkroboter eine elektrische Antriebsmaschine, eine Batterie zum Versorgen der elektrischen Antriebsmaschine mit elektrischer Energie und mindestens ein Antriebsrad umfasst und dazu ausgelegt ist, mittels der elektrischen Antriebsmaschine das mindestens eine Antriebsrad zum Fortbewegen des Parkroboters anzutreiben.

8. Parkroboter nach einem der vorhergehenden Ansprüche, wobei der Parkroboter eine Kommunikationsschnittstelle für eine Kommunikationsverbindung mit zumindest einem weiteren Parkroboter umfasst.

9. Verfahren zum Betreiben eines Parkroboters (20), der ein Paar Radauflagearme (36) umfasst, die jeweils zumindest mittelbar mittels eines Kurbelelements (60) um eine jeweilige Drehachse (39) drehbar gelagert sind, umfassend die Schritte:
- autonomes Heranfahren des Parkroboters (20) von außen neben ein Rad (14) einer Radachse (12) eines Kraftfahrzeugs (10) in eine Aufnahmeposition, wobei die jeweiligen Radauflagearme (36) des Parkroboters (20) jeweils parallel zur Radachse (12) angeordnet werden und einer der Radauflagearme (36) in einer Fahrzeuglängsrichtung vor und der andere Radauflagearm (36) in Fahrzeuglängsrichtung hinter dem Rad (14) positioniert wird;
- Anheben des Rades (14) des Kraftfahrzeugs (10) durch jeweiliges Drehen des jeweiligen Radauflagearms (36) um die jeweilige Drehachse (39) in einer vorgegebenen jeweils entgegengesetzten Drehrichtung.

10. Verfahren nach dem vorhergehenden Anspruch, wobei drei weitere Parkroboter (20) jeweils ein weiteres Rad (14) von insgesamt vier Rädern (14) des Kraftfahrzeugs (10) angehoben haben, die vier Parkroboter (20) jeweils in Übereinstimmung mit jeweiligen bereitgestellten Fahrtrajektorien zu einer vorgegebenen Zielposition fahren und dort das Kraftfahrzeug (10) durch jeweiliges Drehen der jeweiligen Radauflagearme (36) in der jeweiligen entgegengesetzten Drehrichtung absetzen.

## Claims

1. Parking robot (10) for a motor vehicle (10), wherein the parking robot (20) has a pair of wheel bearing arms (36) which by means of a crank element (60) are in each case at least indirectly mounted so as to be rotatable about a respective rotation axis (39), and the parking robot (20) is conceived for autonomously moving from the outside to a receiving position beside a wheel (14) of a wheel axle (12) of the motor vehicle (10) in which the respective wheel bearing arms (36) are in each case disposed so as to be parallel with the wheel axle (12) and one of the wheel bearing arms (36) in a vehicle longitudinal direction is positioned in front of the wheel (14) and the other wheel bearing arm (36) in the vehicle longitudinal direction is positioned behind the wheel (14), and is conceived for raising the wheel (14) of the motor vehicle (10) by correspondingly rotating the respective wheel bearing arm (36) about the respective rotation axis (39) in a predefined rotation direction, wherein the respective rotation directions of the respective wheel bearing arms (36) are mutually opposed.

2. Parking robot (20) according to the preceding claim, wherein the respective wheel bearing arm (36) by way of a respective eccentric cable drum (62) is at least indirectly coupled rigidly to the respective crank element (60), said cable drum (62) having a first sub-region having a predefined first drum radius (63') and a second sub-region having a predefined second drum radius (63") which is larger than the first drum radius (63'), wherein a respective cable (64) is wound around the cable drum (62) and the cable drum (62) is mounted so as to be rotatable about the rotation axis (39), and a central drive unit (66) of the parking robot (20) is conceived for winding and unwinding the respective cable (64) in an alternating manner on the respective cable drum (62).

3. Parking robot (20) according to one of the preceding claims, wherein a respective lock disk (70) is coupled to the respective crank element (60) and is mounted so as to be rotatable about the respective rotation axis (39), wherein the respective lock disk (70) is assigned a safety key (72) which, when bearing on the lock disk (70) by means of a holding element (74), in the rotation of the respective lock disk (70) is conceived for moving about the respective rotation axis (39) in the predefined rotation direction from one tooth (76) of the lock disk (70) to a tooth (76') that is adjacent in the rotation direction, and for blocking a rotation in the opposite rotation direction.

4. Parking robot (20) according to the preceding claim, wherein the safety key (72) for setting down the wheel (14) of the motor vehicle (10) during a corresponding rotation of the respective wheel bearing arm (36) about the respective rotation axis (39) in the opposite rotation direction, by means of the holding element (74) is conceived for being held at a predefined spacing (78) from the lock disk (70).

5. Parking robot (20) according to one of the preceding claims, wherein the respective wheel bearing arms (36) have a respective slip roller (38), the respective rotation axis (57) of said slip roller (38) being disposed so as to be parallel with the rotation axis (39).

6. Parking robot according to one of the preceding claims, wherein the parking robot comprises a sensor installation which is conceived for detecting an environment of the parking robot as well as for localizing obstacles to the parking robot in the detected environment.

7. Parking robot according to one of the preceding claims, wherein the parking robot comprises an electric drive machine, a battery for supplying the electric drive machine with electric power, and at least one drive wheel, and by means of the electric drive machine is conceived for driving the at least one drive wheel in order for the parking robot to be moved.

8. Parking robot according to one of the preceding claims, wherein the parking robot comprises a communications interface for a communications link to at least one further parking robot.

9. Method for operating a parking robot (20) which comprises a pair of wheel bearing arms (36) which by means of a crank element (60) are in each case at least indirectly mounted so as to be rotatable about a respective rotation axis (39), comprising the following method steps:
- autonomously moving the parking robot (20) from the outside to a receiving position beside a wheel (14) of a wheel axle (12) of a motor vehicle (10), wherein the respective wheel bearing arms (36) of the parking robot (20) are in each case disposed so as to be parallel with the wheel axle (12), and one of the wheel bearing arms (36) in a vehicle longitudinal direction is positioned in front of the wheel (14) and the other wheel bearing arm (36) in the vehicle longitudinal direction is positioned behind the wheel (14);
- raising the wheel (14) of the motor vehicle (10) by correspondingly rotating the respective wheel bearing arm (36) in a predefined respective opposite rotation direction about the respective rotation axis (39) .

10. Method according to the preceding claim, wherein three further parking robots (20) have in each case raised one further wheel (14) of a total of four wheels (14) of the motor vehicle (10), the four parking robots (20) move in each case so as to correspond to respective provided travel trajectories to a predefined target position, and at the latter set down the motor vehicle (10) by correspondingly rotating the respective wheel bearing arms (36) in the respective opposite rotation direction.

## Revendications

1. Robot de stationnement (10) pour véhicule automobile (10), le robot de stationnement (20) présentant une paire de bras (36) de soutien de roue montés au moins indirectement au moyen d'un élément de manivelle (60) de manière à pouvoir tourner autour d'un axe de rotation (39) respectif, le robot de stationnement (20) étant conçu pour s'approcher depuis l'extérieur et de manière autonome à côté d'une roue (14) d'un essieu (12) du véhicule automobile (10), dans une position de réception dans laquelle chacun des bras (36) de soutien de roue est disposé parallèlement à l'essieu (12), l'un des bras (36) de soutien de roue étant positionné en avant de la roue (14) dans le sens de la longueur du véhicule et l'autre bras (36) de soutien de roue étant disposé en arrière de la roue (14) dans le sens de la longueur du véhicule, et relever la roue (14) du véhicule automobile (10) en faisant tourner le bras (36) de soutien de roue concerné autour de l'axe de rotation (39) correspondant dans un sens de rotation prédéterminé, les sens de rotation des différents bras (36) de soutien de roue étant opposés l'un à l'autre.

2. Robot de stationnement (20) selon la revendication précédente, dans lequel chaque bras (36) de soutien de roue et l'élément de manivelle (60) correspondant sont au moins indirectement accouplés rigidement à une poulie excentrique (62) correspondante dont une première partie présente un premier rayon prédéterminé (63') et une deuxième partie un deuxième rayon prédéterminé (63") plus grand que le premier rayon prédéterminé (63'), un câble respectif (64) étant enroulé autour de la poulie (62) et la poulie (62) étant montée à rotation autour de l'axe de rotation (39), une unité centrale d'entrainement (66) du robot de stationnement (20) étant configurée pour enrouler et dérouler en alternance chaque câble (64) autour de la poulie (62) correspondante.

3. Robot de stationnement (20) selon l'une des revendications précédentes, dans lequel un disque denté respectif (70) accouplé à chaque élément de manivelle (60) est monté à rotation autour de l'axe de rotation (39) correspondant, une clavette de sécurité (72) associée à chaque disque denté (70) étant configurée pour, au moyen d'un élément de retenue (74) placé sur le disque denté (70), lors de la rotation du disque denté (70) respectif autour de l'axe de rotation (39) correspondant, être déplacée dans le sens de rotation prédéterminé d'une dent (76) du disque denté (70) à une dent (76') voisine dans le sens de rotation et bloquer la rotation dans le sens de rotation opposé.

4. Robot de stationnement (20) selon l'une des revendications précédentes, dans lequel pour abaisser la roue (14) du véhicule automobile (10), la clavette (72) est configurée pour être maintenue au moyen de l'élément de retenue (74) à une distance prédéterminée (78) du disque denté (70) pendant chaque rotation du bras (36) de soutien de roue correspondant dans le sens de rotation opposé autour de l'axe de rotation (39).

5. Robot de stationnement (20) selon l'une des revendications précédentes, dans lequel chacun des bras (36) de soutien de roue présente un patin rotatif (38) respectif dont l'axe de rotation (57) est parallèle à l'axe de rotation (39).

6. Robot de stationnement (20) selon l'une des revendications précédentes, dans lequel le robot de stationnement comprend un dispositif à capteurs configuré pour saisir l'environnement du robot de stationnement et localiser pour le robot de stationnement des obstacles présents dans l'environnement saisi.

7. Robot de stationnement (20) selon l'une des revendications précédentes, dans lequel le robot de stationnement comprend une machine électrique d'entraînement, une batterie qui alimente en électricité la machine d'entraînement ainsi qu'au moins une roue d'entraînement, et est configuré pour entraîner à l'aide de la machine électrique d'entraînement au moins une roue d'entraînement qui fait avancer le robot de stationnement.

8. Robot de stationnement (20) selon l'une des revendications précédentes, dans lequel le robot de stationnement comprend une interface de communication qui permet d'établir une liaison de communication avec au moins un autre robot de stationnement.

9. Procédé d'utilisation d'un robot de stationnement (20) comprenant une paire de bras (36) de soutien de roue montés au moins indirectement au moyen d'un élément de manivelle (60) de manière à pouvoir tourner autour d'un axe de rotation (39) respectif, le procédé comprenant les étapes suivantes :
- approcher depuis l'extérieur et de manière autonome le robot de stationnement (20) à côté d'une roue (14) d'un essieu (12) du véhicule automobile (10) jusque dans une position de réception dans laquelle chacun des bras (36) de soutien de roue est disposé parallèlement à l'essieu (12), l'un des bras (36) de soutien de roue étant positionné en avant de la roue (14) dans le sens de la longueur du véhicule et l'autre bras (36) de soutien de roue étant disposé en arrière de la roue (14) dans le sens de la longueur du véhicule, et
- relever la roue (14) du véhicule automobile (10) en faisant tourner le bras (36) de soutien de roue concerné autour de l'axe de rotation (39) correspondant dans des sens de rotation prédéterminés opposés l'un à l'autre.

10. Procédé selon la revendication précédente, dans lequel après que trois autres robots de stationnement (20) ont relevé une autre roue (14) d'en tout quatre roues (14) du véhicule automobile (10), les quatre robots de stationnement (20) se déplacent vers une position cible prédéterminée en accord avec chacune des trajectoires de déplacement préparées, pour ensuite abaisser le véhicule (10) en faisant tourner les différents bras (36) de soutien de roue dans leur sens de rotation opposé.
